# NEW EUROPEAN PATENT SPECIFICATION

(11) **EP 0 636 518 B2**
(45) Date of publication and mention of the opposition decision: **06.11.2002**
(45) Mention of the grant of the patent: 08.10.1997
(21) Application number: 94111505.7
(22) Date of filing: 22.07.1994
(51) Int. Cl.: B60R 13/08, F02B 77/13

(54) **Vehicle soundproofing device, particularly for motor vehicles**
Fahrzeugschallschutzvorrichtung, insbesondere für Kraftfahrzeuge
Dispositif d'insonorisation de véhicule, en particulier pour véhicules automobiles

(30) Priority: 27.07.1993 IT TO930184 U
(43) Date of publication of application: 01.02.1995
(73) Proprietor: IVECO FIAT S.p.A., 10156 Torino (IT)
(72) Inventor: Figliuolo, Rocco, I-10011 Aglie' (IT); Vipiana, Carlo, I-10141 Torino (IT)
(74) Representative: Jorio, Paolo, Dr. Ing.

(56) References cited:
- EP-A- 0 476 286
- DE-A- 3 242 604
- DE-U- 8 713 640
- FR-A- 2 319 508
- PATENT ABSTRACTS OF JAPAN vol. 11, no. 168 (M-594) 29 May 1987 & JP-A-62 000 629 (KOMATSU FORKLIFT KK) 6 January 1987
- Zeichnung von VW-Ersatzteilwesen "Geräuschdämpfung"

## Description

The present invention relates to a vehicle soundproofing device, particularly for motor vehicles.

In the following description, specific reference is made, purely by way of example, to a soundproofing device for industrial vehicles with an internal combustion engine.

For reducing the noise produced by vehicle components such as the engine and transmission, damping devices are employed comprising two shells of soundproofing material defining a chamber in which the components are housed. One of the shells extends beneath the vehicle cab and presents one edge connected to the vehicle frame, while the other normally extends on the opposite side of the frame to the other shell, and presents an end edge connected either to the frame or to the engine block.

EP 0 476 286 discloses a soundproofing device comprising one or more normally separate jackets, one of which is made of soundproofing material, and so shaped as to enclose all but specific portions of the component and, in particular, a bottom end portion of the engine. Though relatively compact, the noise damping performance of devices of this type is less than satisfactory.

It is an object of the present invention to provide a vehicle soundproofing device designed to overcome the aforementioned drawbacks, and which in particular provides for troublefree, low-cost production, a high degree of efficiency, and troublefree fitment to the vehicle.

According to the present invention, there is provided a vehicle soundproofing device, for motor vehicles as defined in claim 1.

A non-limiting embodiment of the present invention will be described by way of example with reference to the accompanying drawings, in which:
Figure 1 shows a side view, with parts removed for clarity, of a preferred embodiment of the device according to the present invention, fitted to an industrial vehicle;
Figure 2 shows a section, with parts removed for clarity, along line II-II in Figure 1;
Figure 3 shows a larger-scale section of a detail in Figure 2.

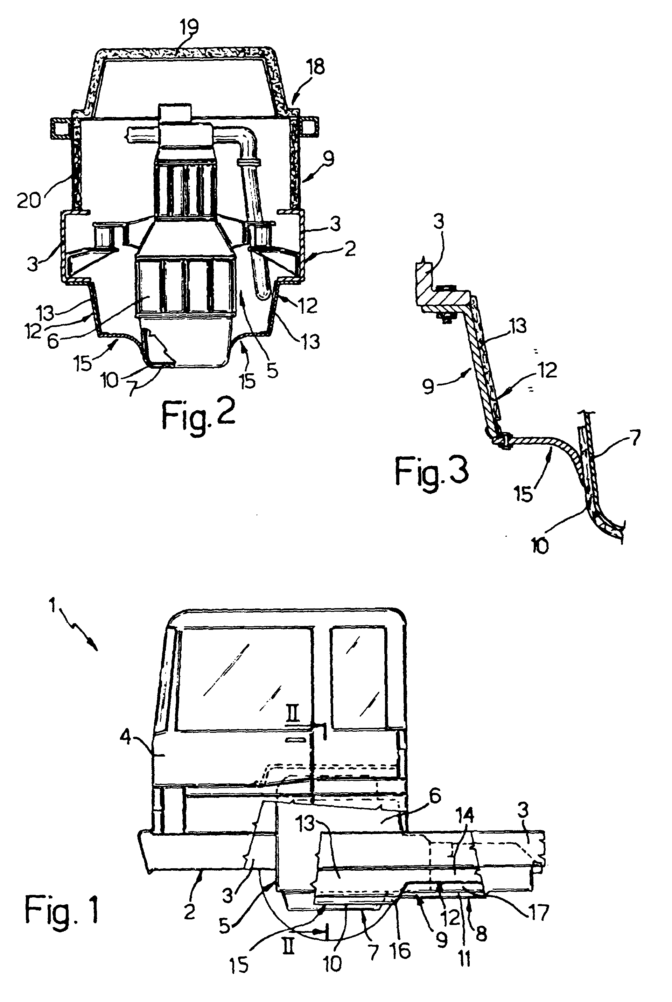

Number 1 in Figure 1 indicates a vehicle, in the example shown an industrial vehicle, comprising a frame 2 with two side members 3, and a cab 4 fitted in known manner to frame 2 over side members 3. Vehicle 1 is powered by an internal combustion engine 5 supported in known manner on frame 2, between side members 3, and comprising a block 6 extending between side members 3. Engine 5 also comprises an oil sump 7, and is connected to a transmission (not shown) housed inside a casing 8 also extending substantially between side members 3.

Vehicle 1 is fitted with a soundproofing device 9 for damping the noise produced by vehicle 1 and in particular by engine 5 and the transmission (not shown). Device 9 comprises a first and second casing 10 and 11 preferably integral with each other, both made of sound-absorbing and/or acoustically insulating material, and fitted respectively to the bottom end portion of engine 5 and casing 8 so as to at least partly enclose oil sump 7 and the bottom portion of block 6, and casing 8 respectively.

As shown in Figures 1 and 2, and particularly in Figure 3, device 9 also comprises two screens 12 also made of sound-absorbing and/or acoustically insulating material, extending on opposite lateral sides of engine 5 and casing 8, and connected in known manner integral with respective side members 3 from which they project and converge downwards.

More specifically, each screen 12 comprises a first substantially flat portion 13 facing engine 5; and a second portion 14 aligned with respective first portion 13 and which extends facing casing 8.

Device 9 also comprises a pair of elastic lips 15 made of sound-absorbing material, and each of which, in use, is curved with its concavity facing outwards, and comprises two aligned portions 16 and 17, the respective ends of which facing respective screens 12 are connected integral with respective portions 13 and 14 of screens 12, and the respective opposite ends of which cooperate elastically in sliding manner with the outer lateral surface of respective casing 10, 11.

Finally, device 9 comprises a half shell 18 with its concavity facing engine 5, and comprising an end wall 19 shaped to match the contour of the floor of cab 4, and a lateral wall 20 enclosing the portion of engine 5 projecting upwards beyond side members 3, and connected integral with side members 3.

In actual use, therefore, device 9 presents the advantage of permitting relative displacement of engine 5 and the transmission (not shown) in relation to frame 2, while at the same time maintaining the damping efficiency of the noise produced by engine 5 and the transmission (not shown) unchanged.

Moreover, device 9 is relatively cheap to produce, and enables any maintenance work, e.g. on engine 5, to be carried out by simply removing one of screens 12.

Clearly, changes may be made to device 9 as described above without, however, departing from the scope of the present invention. In particular, screens 12 and lips 15 need not necessarily present respective portions 14 and 17, in which case, device 9 would provide solely for reducing the noise produced by engine 5.

## Claims

1. A vehicle soundproofing device (9) for motor vehicles comprising an engine (5) and a frame (3) supporting the engine (5), the device (9) including a first bottom casing (10) enclosing a bottom end portion of the engine (5) and screen means (12, 15) connected to the frame (3), extending on opposite latéral sides of the engine (5), and cooperating with the outer surfaces of said first casing (10),
**characterized in that** said first bottom casing (10) is made of acoustically insulating material, said screen means (12, 15) including at least a pair of screens (12) made of acoustically insulating material, which project downwards from the frame (3) and hâve respective substantially flat first portions (13) facing said engine (5) on opposite sides thereof; said screen means (12, 15) further including two respective elastic lips (15) made of acoustically insulating material and connected to respective said screens (12), said lips (15) comprising respective first portions (16) which extend on opposite latéral sides of the engine (5) and cooperate elastically in a sliding manner with said outer surfaces of said first casing (10).

2. A device as claimed in Claim 1, **characterized in that**, in use, each said lip (15) is curved with its concavity facing outwards.

3. A device as claimed in Claim 1 or 2, **characterized in that** said lips (15) and said screens (12) are made of sound-absorbing material.

4. A device as claimed in any one of the foregoing Claims, **characterized in that** it comprises a second casing (11) of sound-absorbing material enclosing the bottom end portion of a further casing (8) housing the transmission of the vehicle (1); the screens (12) also comprising respective second portions (14) adjacent to the respective first portions (13) and extending, in use, on opposite lateral sides of said further casing (8); and said lips (15) comprising respective second portions (17) connected integral with the second portions (14) of the respective screens (12) and cooperating elastically with the outer surface of said second casing (11).

## Patentansprüche

1. Fahrzeugschallschutzvorrichtung (9) für Motorfahrzeuge mit einem Motor (5) und einem Rahmen (3), der den Motor (5) abstützt, wobei die Vorrichtung (9) ein erstes unteres Gehäuse (10), das einen unteren Endabschnitt des Motors (5) umschließt, und Abachirmeinrichbungen (12, 15) aufweist, die mit dem Rahmen (3) verbunden sind, sich an entgegengesetzten seitlichen Seiten des Motors (5) erstrecken und mit rien Außenflächen des ersten Gehäuses (10) zusammenwirken,
**dadurch gekennzeichnet, daß**
das erste untere Gehäuse (10) aus schallisolierendem Material ist, wobei die Abschirmeinrichtungen (12, 15) wenigstens ein Paar von Abschirmungen (12) aufweisen, die aus schallisolierendem Material sind, die von dem Rahmen (3) nach unten vorstehen und jeweilige im Wesentlichen ebene erste Abschnitte (13) aufweisen, die zu dem Motor (5) an entgegengesetzten Seiten desselben gerichtet sind; wobei die Abschirmeinrichtungen (12, 15) ferner zwei jeweilige elastische Lippen (15) aufweisen, die aus schallisolierendem Material sind und an jeweilige Abschirmungen (12) verbunden sind, wobei die Lippen (15) jeweilige erste Abschnitte (16) aufweisen, die sich an entgegengesetzten seitlichen Seiten des Motors (5) erstrecken und elastisch auf gleitende Art und Weise mit den Außenflächen des ersten Gehäuses (10) zusammenwirken.

2. Vorrichtung nach Anspruch 1,
**dadurch gekennzeichnet, daß**
im Gebrauch eine jede der Lippen (15) gekrümt ist,
wobei ihre Aushöhlung nach außen gerichtet ist,

3. Vorrichtung nach Anspruch 1 oder 2,
**dadurch gekennzeichnet, daß**
die Lippen (15) und die Abschirmungen (12) aus schallabsorbierendem Material sind.

4. Vorrichtung nach einem der vorangehenden Ansprüche,
**dadurch gekennzeichnet, daß**
diese ein zweites Gehäuse (11) aus schallabsorbierendem Material aufweist, das den unteren Endabschnitt eines weiteren Gehäuses (8) umschließt, das die Kraftübertragung des Fahrzeugs (1) unterbringt; wobei die Abschirmungen (12) ferner jeweilige zweite Abschnitte (14) aufweisen, die an die jeweiligen ersten Abschnitte (13) anliegen und sich im Gebrauch an entgegengesetzten seitlichen Seiten des weiteren Gehäuses (8) erstrecken; und wobei die Lippen (15) jeweilige zweite Abschnitte (17) aufweisen, die einstückig mit den zweiten Abschnitten (14) der jeweiligen Abschirmungen (12) verbunden sind und elastisch mit der äußeren Fläche des zweiten Gehäuses (11) zusammenwirken.

## Revendications

1. Dispositif d'insonorisation de véhicule (9) pour véhicules automobiles comprenant un moteur (5) et un châssis (3) supportant le moteur (5), le dispositif (9) incluant une première enveloppe de fond (10) enfermant une partie d'extrémité de fond du moteur (5) et des moyens d'écrans (12, 15) reliés au châssis (3), s'étendant sur des côtés latéraux opposés du moteur (5), et coopérant avec les surfaces extérieures de ladite première enveloppe (10),
**caractérisé en ce que** ladite première enveloppe de fond (10) est réalisée en matériau isolant acoustique, lesdits moyens d'écrans (12, 15) incluant au moins une paire d'écrans (12) réalisée en matériau isolant acoustique, qui se prolonge vers le bas du châssis (3) et des premières parties respectives (13) sensiblement plates tournées face audit moteur (5) sur les côtés opposés de celui-ci; lesdits moyens d'écrans (12, 15) incluant de plus deux lèvres élastiques respectives (15) réalisées en matériau isolant acoustique et reliées auxdits écrans respectifs (12), lesdites lèvres (15) comprenant des premières parties respectives (16) qui s'étendent sur les côtés opposés latéraux du moteur (5) et coopèrent élastiquement par glissement avec lesdites surfaces extérieures de ladite première enveloppe (10).

2. Dispositif selon la revendication 1, **caractérisé en ce qu'**en service, chacune desdites lèvres (15) est incurvée de manière que sa concavité soit tournée face à l'extérieur.

3. Dispositif selon la revendication 1 ou 2, **caractérisé en ce que** lesdites lèvres (15) et lesdits écrans (12) sont réalisés en matériau amortissant les sons.

4. Dispositif selon l'une quelconque des revendications précédentes, **caractérisé en ce qu'**il comprend une seconde enveloppe (11) en matériau isolant acoustique enfermant la partie d'extrémité de fond d'un autre boîtier (8) enfermant la transmission du véhicule (1); les écrans (12) comprenant également des secondes parties respectives (14) adjacentes aux premières parties respectives (13) et s'étendant, en service; sur des côtés latéraux opposés dudit autre boîtier (8); et lesdites lèvres (15) comprenant des deuxièmes parties respectives (17) raccordées de manière monobloc aux deuxièmes parties (14) des écrans respectifs (12) et agissant solidairement de façon élastique avec la surface extérieure de ladite deuxième enveloppe (11).
